# EUROPEAN PATENT SPECIFICATION

(11) **EP 1 454 455 B1**
(45) Date of publication and mention of the grant of the patent: **24.01.2007**
(21) Application number: 02804705.8
(22) Date of filing: 21.11.2002
(51) Int. Cl.: H04L 12/18, H04M 3/56

(54) **LOCAL CACHING OF IMAGES FOR ON-LINE CONFERENCING PROGRAMS**
LOKALE CACHE-SPEICHERUNG VON BILDERN FÜR ONLINE-KONFERENZPROGRAMME
MISE EN CACHE LOCALE D'IMAGES POUR PROGRAMMES DE CONFERENCES EN LIGNE

(30) Priority: 12.12.2001 US 20398
(43) Date of publication of application: 08.09.2004
(73) Proprietor: INTEL CORPORATION, Santa Clara, CA 95052 (US)
(72) Inventor: STANLEY, Randy, Aptos, CA 95003 (US)
(74) Representative: Goddar, Heinz J.
(86) International application number: PCT/US2002/037690
(87) International publication number: WO 2003/051003

(56) References cited:
- WO-A-00/52887
- WO-A-00/69140
- WO-A-01/13578
- WO-A-01/65807
- US-A- 5 999 525

## Description

### Background

This invention generally relates to multiparty communications over computer networks. More specifically, the invention relates to on-line meetings and methods and systems to be used in on-line meetings involving a first and a second processor based system.

In on-line meeting software, a presenter can distribute various images via a communications network to other meeting participants such that each participant is simultaneously viewing the same image on his or her computer. By way of example, the image may be a slide created by presentation graphics software. Meeting participants may then discuss a commonly displayed image by, for example, on-screen text messaging or "chat"windows, video phones or conventional telephone conference calling.

With conventional systems, if the meeting participants wish to return to a previously sent slide for further discussion, the image must be resent from the meeting presenter's computer to each participant's computer. This is a time-consuming process inasmuch as images typically comprise large amounts of data and the data must be sent over communications channels having finite bandwidths.

Thus, there is a need for a way to facilitate on-line conferences.

WO 00/69140 A1 discloses a network arranged to allow for a simple and secure way of establishing communication systems between users or servers, wherein messages are not sent directly by the users but through routing services provided on one or more services. The system comprises a framework component for caching data within data abstractions supplied and reuse existing data abstraction object instances when this is efficient.

WO 01/13578 discloses an infrastructure comprising a warehouse system in communication with one or more deliver service over an internet wormhole. The system has a two-level cache structure with a level-one cache at the warehouse system and the level-two cache at the delivery server. It is furthermore disclosed to use a cache in connection with a browser.

### Brief Description of the Drawings

- Figure 1: shows networked, processor-based systems comprising one embodiment of the present invention;
- Figure 2: is a software flow chart for one embodiment of the invention;
- Figure 3: is a flow chart for another embodiment of the invention; and
- Figure 4: is a flow chart for another embodiment of the invention.
- Figure 5: is a flow chart for another embodiment of the invention.

### Detailed Description

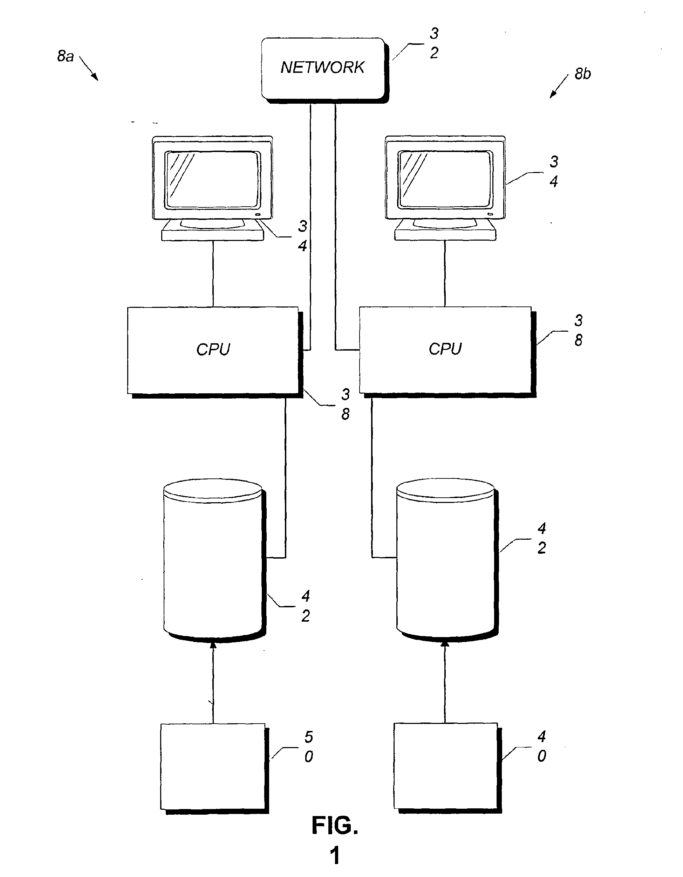

A network 32 includes at least two client processor-based systems 8, as shown in Figure1. The network 32 may be a wired or wireless local area network (LAN) in one embodiment of the present invention. Each system 8 may include a processor 38 coupled to a display 34 and a storage device 42. The processor-based system 8a may be used by the presenter in an on-line meeting or conference set up between a presenter and one or more participants. The system 8b may be used by a participant.

Both systems 8 may be personal computers in one embodiment and the storage 42 may be, for example, a magnetic media disk drive with associated disk controllers or solid-state memory such as random access memory (RAM). The system 8b storage 42 may store software 40 for enabling the processor 38 to participate in a network presentation as well as the data 30 to be presented. The system 8a storage 42 may store software 50 for implementing a network presentation.

The software 40 may operate as part of or work with on-line conferencing software. An example of on-line conferencing software is NetMeeting software from Microsoft Corporation, Redmond, Washington.

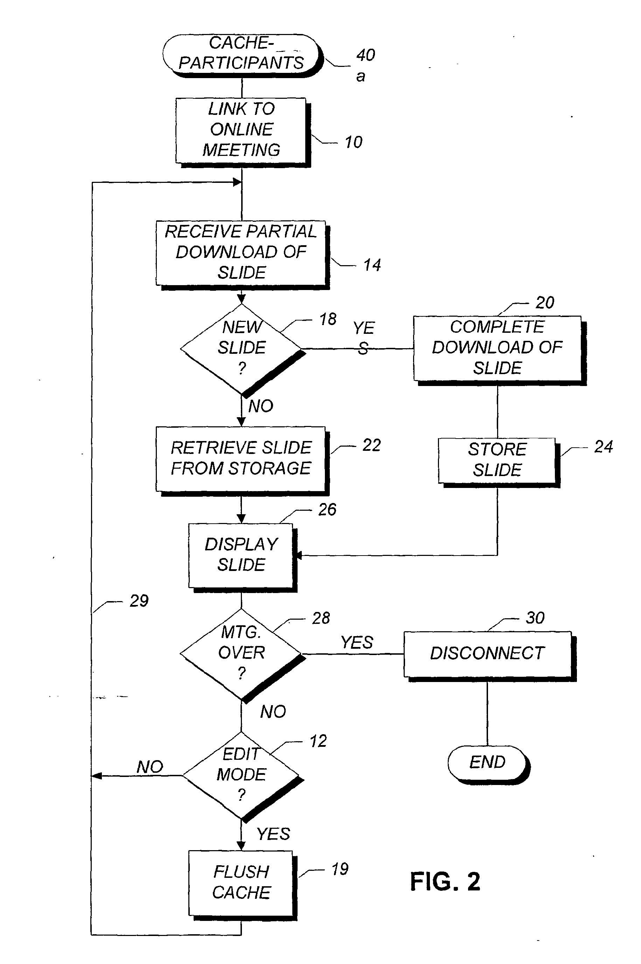

An on-line meeting may be set up between a presenter system 8a and one or more participant systems 8b by establishing communications over a network 32, as indicated at block 10 of Figure 2. The presenter's system 8a may send data to each of the participant systems 8b. The shared data may be, for example, a series of images or frames. The presenter's system 8a may send each image when the presenter desires to change the image displayed for viewing by the participants.

The presenter may have created the images with presentation graphics software and the images may comprise slides. Each slide may have a unique identifier that may be, for example, a file attribute of the data comprising the image.

During the course of the on-line meeting, the presenter's system 8a may send data relating to a slide to participant systems 8b, as indicated at block 14. As shown at diamond 18, a participant's system 8b may determine, for example by testing the slide identifier, whether the slide being sent by the presenter's system 8a is a new slide or a previously-sent slide. Multitasking techniques may be employed by a participant's system 8a to compare the identifier with the identifiers of cached images while the session is still in progress.

If the slide is a previously-sent slide, it may be available in a local cache of slides and may be retrieved from the cache, as indicated at block 22. The cached slide may be displayed, as indicated at block 26, on the participant's processor-based system 8b.

If the slide is in the local cache, the transmitted image data may be directed to a "bit bucket" while the cached slide is retrieved and displayed as indicated at blocks 22 and 26, respectively. A bit bucket is an imaging location into which data can be discarded.

If, however, the slide is not in the cache, the slide may be downloaded from the presenter's system 8a over the network 32, as indicated at block 20, and subsequently cached and displayed, as indicated at blocks 24 and 26, respectively. In this way, participants who join the meeting late may download a slide previously sent to other participants without delaying the image viewing by the earlier-joining participants whose systems may have the slide in their local caches.

Inasmuch as data can typically be retrieved from a local cache more quickly than it can be downloaded via a network 32, participants in an on-line meeting can save time whenever the presenter returns to a previously-sent slide for discussion that is already available in a participant's system 8b.

If the meeting is concluded, as indicated at the right branch of diamond 28, the participant system 8b may disconnect from the session as indicated at block 30. The meeting may be over when an indicating signal is sent from the system 8a to the system 8b in one embodiment. If the meeting is not over, as indicated by the lower branch of diamond 28, the participant's system 8b may query the presenter to determine whether the presenter has changed his or her system to edit mode, as indicated at diamond 12.

Graphics generating programs may have multiple modes of operation. For example, a software package for presentation graphics may have an editing mode wherein slides are created and modified and a presentation mode or "slide show" mode wherein a predetermined sequence of slides is displayed seriatim.

The presenter may desire to edit the presentation graphics during the course of an on-line meeting. In such a situation, the presenter may change the state of the system 8a from a presentation mode to an editing mode. If the presenter alters one or more images on his or her system, one or more images which may have been cached by the participants' systems may no longer correspond to the images stored by the presenter's system 8a even though the images may have the same identifier. In such an instance, a participant system 8b local cache is "stale" and should be "flushed", as indicated at block 19 - i.e., cleared from the data storage sub-system of a participant's system as though no images were cached.

The presenter's system 8a may broadcast a message or code that indicates to all participant systems 8b that the presenter has switched his or her system to editing mode. In response, each participant's system 8b local cache may be flushed, as indicated at block 19. Alternatively, each participant system 8b may query the presenter's system 8a regarding its mode, as indicated at diamond 12. If the presenter's system 8a responds that it is in edit mode, the participant's system 8b may flush its local cache, as indicated at block 19. In yet another alternative, the presenter's system 8a may indicate which image or images have been altered and, in response, the participant's system 8b may flush only those images from its local cache.

In this way, a meeting participant's system 8b may build a local cache of slides during the course of an on-line meeting as the meeting presenter's system 8a sends individual slides, seriatim. During a meeting, because a participant's system 8b is able to retrieve previously-sent slides from a local cache, the images may be displayed more quickly than if the image data is again downloaded from a network 32.

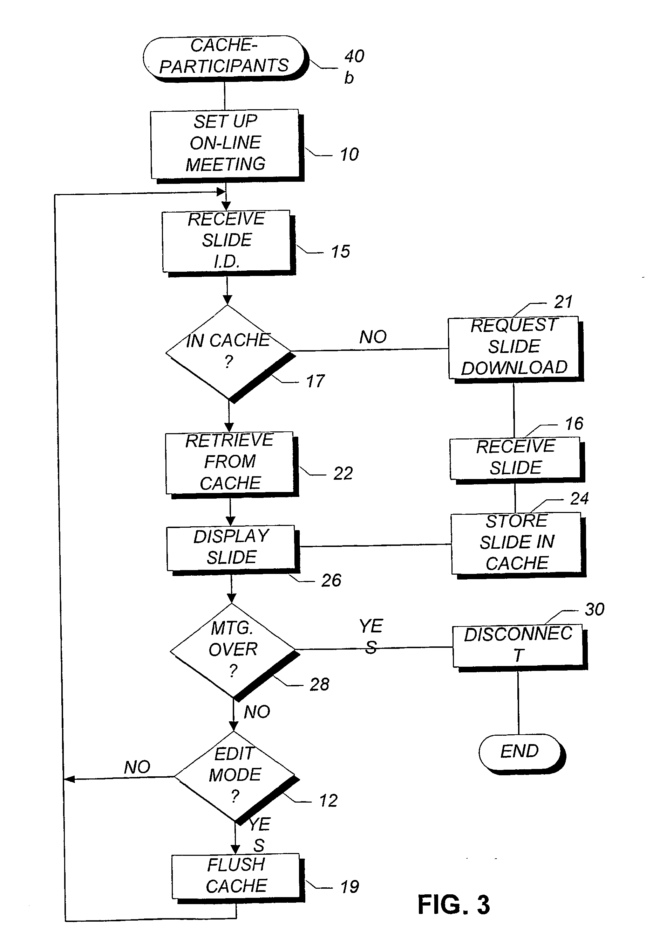

In another embodiment, an on-line meeting presenter's system may send a slide identifier (but initially not image data) to meeting participant system 8b, as indicated at block 15 of Figure 3. The presenter system 8a may then wait for a request from a participant system 8b for the image data comprising the slide.

As indicated at block 17 of Figure 3, a meeting participant system 8b may determine from the slide identifier whether the slide exists in its local cache. If the slide is found in the local cache, it may be retrieved from the cache 22 and displayed, as indicated at blocks 22 and 26, respectively.

If, however, the image data comprising the slide is not found in the local cache, as indicated at the right branch of diamond 17, the participant system 8b may request the slide from the presenter system 8a, as indicated at block 21. The presenter system 8a may, in response, send the requested slide, as indicated at block 16, which data may then be stored by the participant system 8b in its local cache and displayed, as indicated at blocks 24 and 26, respectively.

In this embodiment, the presenter system 8a need not send the image data comprising the slide if all participant systems 8b already have the slide in their local caches - i.e., if no participant system 8b requests a download of the image data. In this way, both time and network resources may be conserved.

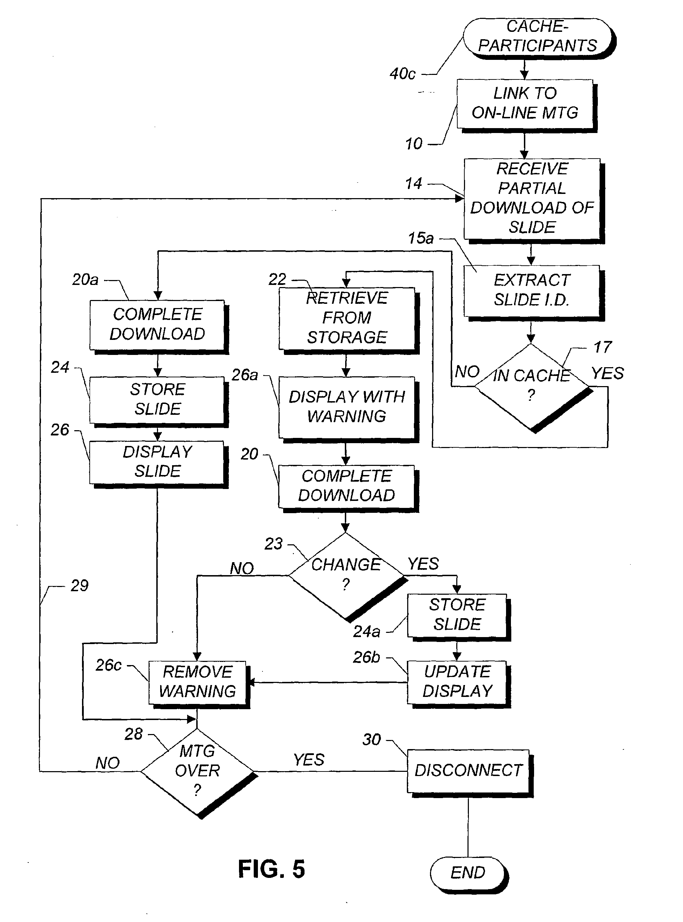

In yet another embodiment, cache-participants may receive a download of a slide during the course of an on-line meeting and subsequently determine whether a cached version differs from the downloaded version. In the meantime, the cached version may be displayed. The presenter's system 8a may send data relating to a slide to participant systems 8b, as indicated at block 14 of Figure 5. A participant's system 8b may extract a slide identifier from this data as shown at block 15a. As shown at diamond 17, a participant's system 8b may then determine, for example by testing the slide identifier, whether the slide being sent by the presenter's system 8a has the same identifier as a previously-sent slide. Multitasking techniques may be employed by a participant's system 8a to compare the identifier with the identifiers of cached images while the session is still in progress.

If the slide identifier corresponds with that of a previously-sent slide, it may be available in a local cache of slides and may be retrieved from the cache, as indicated at block 22. The cached slide may be displayed, as indicated at block 26a, on the participant's processor-based system 8b along with a warning to the viewer that the slide may not correspond with that of the presenter's system.

As indicated at block 20, the download of image data may be completed by the participant's system. As indicated at diamond 23, the just-downloaded image data may then be compared to the cached image data having the same slide identifier to determine whether there has been any change in the data. If no change is detected, the warning on the display may be removed as indicated at block 26c. If, however, a change is found, the just-downloaded data may be stored in the cache replacing the previously stored data having the same identifier, as indicated at block 24a. The displayed image may then be updated using the new data and the display warning removed as indicated at blocks 26b and 26c, respectively. If the changes in the image data are minimal, display techniques may be employed to smoothly "morph" the image from the previous version to the more recent one.

If, however, the slide is not in the cache as indicated by the left branch of diamond 17, the slide may be downloaded from the presenter's system 8a over the network 32, as indicated at block 20a, and subsequently cached and displayed, as indicated at blocks 24 and 26, respectively.

In this way, the speed of a cache-based system may be realized whenever the meeting participants return to a previously sent slide even if the image must subsequently be modified due to a change in the image by the presenter.

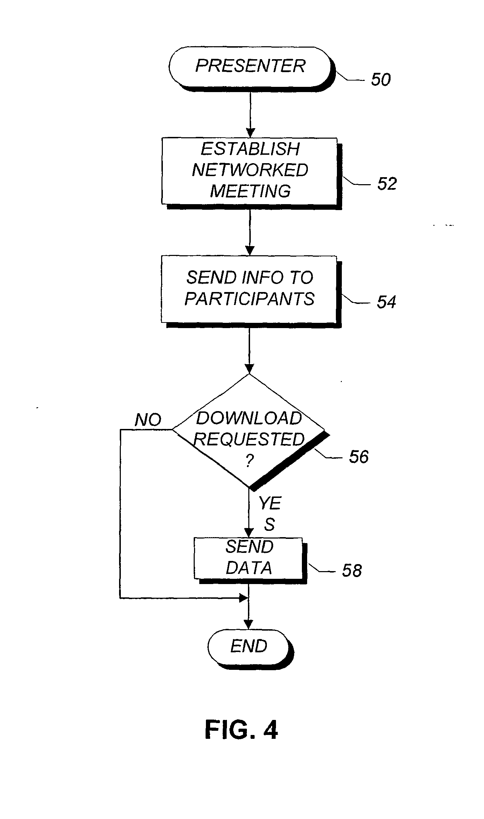

Referring to Figure 4, the software 50 on the presenter system 8a may implement the caching protocol in conjunction with the participant systems 8b. Initially, the presenter system 8a establishes the network meeting as indicated in block 52. Information may be sent to the participants concerning each slide as indicated in block 54. In some embodiments, this may include the initial download of a portion of the slide. In other embodiments, only an identifier for the slide may be provided. If only an identifier is provided, then the information is not sent until the participant indicates that it actually wants the download. If only a portion of the slide is provided, the same protocol may be utilized or, the information may be transmitted even if the participant determines that it will not receive the information.

If the download is requested as determined in diamond 56, the data may be sent as indicated in diamond 58.

In another embodiment, the network 32 may be the Internet. In such case, the systems 8 may communicate and send slides or other data over the Internet.

While the present invention has been described with respect to a limited number of embodiments, those skilled in the art will appreciate numerous modifications and variations therefrom. It is intended that the appended claims cover all such modifications and variations as fall within the scope of the claims.

## Claims

1. A storage medium (42) storing instructions that enable a first processor-based system (8b) to:
set up an on-line meeting with a second processor-based system (8a);
receive data from the second processor-based system (8a) related to information to be transmitted;
determine whether the information is cached; and
retrieve the cached information if the information was cached.

2. storage medium (42) as recited in claim 1 wherein the medium further stores instructions that enable a first processor-based system (8b) to receive an image identifier.

3. A storage medium (42) as recited in claim 2 wherein the medium further stores instructions that enable a first processor-based system (8b) to determine whether the image identifier identifies cached information.

4. A storage medium (42) as recited in claim 3 wherein the medium further stores instructions that enable a first processor-based system (8b) to receive a portion of a downloaded image.

5. A storage medium (42) as recited in claim 1 wherein the medium further stores instructions that enable a first processor-based system (8b) to determine a state of the second processor-based system (8a) and flush cached information depending on the state of the second processor-based system (8a).

6. A storage medium (42) as recited in claim 5 wherein the medium further stores instructions that enable a first processor-based system (8b) to determine whether the second processor-based system (8a) is in a state which allows images to be altered and if so to flush the cached information.

7. A storage medium (42) as recited in claim 1 wherein the medium further stores instructions that enable a first processor-based system (8b) to send to the second processor-based system (8a) a request for information on the state of the second processor-based system and to receive data from the second processor-based system (8a) concerning its state and to flush cached information depending on the state of the second processor-based system (8a).

8. A storage medium (42) as recited in claim 1 wherein the medium further stores instructions that enable a first processor-based system (8b) to download information from the second processor-based system (8a) if the information is not cached.

9. A storage medium (42) as recited in claim 8 wherein the medium further stores instructions that enable a first processor-based system (8b) to tache the downloaded information.

10. A storage medium (42) as recited in claim 9 wherein the medium further stores instructions that enable a first processor-based system (8b) to associate the cached information with an identifier.

11. A storage medium (42) as recited in claim 10 wherein the medium further stores instructions that enable a first processor-based system (8b) to associate the cached information with an identifier included with said data.

12. A processor-based system (8b) comprising:
a processor (38); and
a data storage medium (42) coupled to said processor and storing instructions enabling said processor (38) to set up an on-line meeting with a remote processor-based system (8a), receive data from the remote processor-based system (8a) related to information to be transmitted, determine whether the information is cached, and retrieve the cached information if the information was cached.

13. A processor-based system (8b) as recited in claim 12 wherein the data storage medium (42) further stores instructions enabling the processor (38) to receive an image identifier.

14. A processor-based system (8b) as recited in claim 13 wherein the data storage medium (42) further stores instructions enabling the processor (38) to determine whether the image identifier identifies cached information.

15. A processor-based system (8b) as recited in claim 14 wherein the data storage medium (42) further stores instructions enabling the processor (38) to receive a portion of a downloaded image.

16. A processor-based system (8b) as recited in claim 12 wherein the data storage medium (42) further stores instructions enabling the processor (38) to determine a state of the remote processor-based system (8a) and flush cached information depending of the state of the remote processor-based system (8a).

17. A processor-based system (8b) as recited in claim 16 wherein the data storage medium (42) further stores instructions enabling the processor (38) to determine whether the remote processor-based system (8a) is in a state which allows images to be altered and if so to flush the cached information.

18. A processor-based system (8b) as recited in claim 12 wherein the data storage medium (42) further stores instructions enabling the processor (38) to download information for the remote processor-based system (8a) if the information is not cached.

19. A processor-based system (8b) as recited in claim 18 wherein the data storage medium (42) further stores instructions enabling the processor (38) to cache the downloaded information.

20. A processor-based system (8b) as recited in claim 19 wherein the data storage medium (42) further stores instructions enabling the processor (38) to associate the cached information with an identifier.

21. A processor-based system (8b) as recited in claim 20 wherein the data storage medium (42) further stores instructions enabling the processor (38) to associate the cached information with an identifier included with said data.

22. A method comprising:
setting up an on-line meeting with a processor-based system (8a);
receiving data from the processor-based system (8a) related to information to be transmitted;
determining whether the information is cached; and
retrieving the cached information if the information was cached.

23. The method of claim 22 further comprising determining a state of the processor-based system (8a) and flushing cached information depending on the state of the processor-based system (8a).

24. The method of claim 23 including determining whether the processor-based system (8a) is in a state which allows images to be altered and if so flushing the cached information.

25. The method of claim 23 further comprising flushing cached information in response to data received from the processor-based system (8a).

26. A storage medium (42) storing instructions that enable a first processor-based system (8a) to perform the following steps:
set up an on-line meeting with a second processor-based system (8b), said second
processor-based system (8b) operating according to a method of one of claims 22 to 25;
send data to the second processor-based system (8b) related to information to be transmitted;
and
transmit the information to the second processor-based system (8b) in response to the request from the second processor-based system (8b).

27. A storage medium (42) as recited in claim 26 wherein the medium further stores instructions that enable a first processor-based system (8a) to send data to the second processor-based system (8b) concerning whether a cache of the second processor-based system (8b) should be flushed.

## Patentansprüche

1. Ein Speichermedium (42), das Befehle speichert, die es einem ersten prozessorbasierten System (8b) ermöglichen:
eine Online-Besprechung mit einem zweiten prozessorbasierten System (8a) herzustellen; Daten bezüglich der zu übertragenden Informationen vom zweiten prozessorbasierten System (8a) zu erhalten;
zu ermitteln, ob sich die Informationen im Cache befinden; und
falls die Informationen im Cache gespeichert wurden, diese abzurufen.

2. Ein Speichermedium (42) gemäß Anspruch 1, **dadurch gekennzeichnet, dass** das Medium ferner Befehle speichert, die es einem ersten prozessorbasierten System (8b) ermöglichen, einen Bildbezeichner zu empfangen.

3. Ein Speichermedium (42) gemäß Anspruch 2, **dadurch gekennzeichnet, dass** das Medium ferner Befehle speichert, die einem ersten prozessorbasierten System (8b) die Feststellung ermöglichen, ob der Bildbezeichner die im Cache gespeicherten Informationen erkennt.

4. Ein Speichermedium (42) gemäß Anspruch 3, **dadurch gekennzeichnet, dass** das Medium ferner Befehle speichert, die einem ersten prozessorbasierten System (8b) den Empfang eines heruntergeladenen Bildteils ermöglichen.

5. Ein Speichermedium (42) gemäß Anspruch 1, **dadurch gekennzeichnet, dass** das Medium ferner Befehle speichert, die einem ersten prozessorbasierten System (8b) die Ermittlung eines Zustands des zweiten prozessorbasierten Systems (8a) und je nach Zustand des zweiten prozessorbasierten Systems (8a) das Räumen der im Cache gespeicherten Informationen ermöglichen.

6. Ein Speichermedium (42) gemäß Anspruch 5, **dadurch gekennzeichnet, dass** das Medium ferner Befehle speichert, die einem ersten prozessorbasierten System (8b) die Ermittlung, ob sich das zweite prozessorbasierte System (8a) in einem Bildabänderungen erlaubenden Zustand befindet und im positiven Fall das Räumen der im Cache gespeicherten Informationen ermöglichen.

7. Ein Speichermedium (42) gemäß Anspruch 1, **dadurch gekennzeichnet, dass** das Medium ferner Befehle speichert, die es einem ersten prozessorbasierten System (8b) ermöglichen, dem zweiten prozessorbasierten System (8a) eine Anforderung von Informationen über den Zustand des zweiten prozessorbasierten Systems (8a) zu senden und vom zweiten prozessorbasiertem System (8a) Daten über dessen Zustand zu empfangen und je nach Zustand des zweiten prozessorbasierten Systems (8a) die im Cache gespeicherten Informationen zu räumen.

8. Ein Speichermedium (42) gemäß Anspruch 1, **dadurch gekennzeichnet, dass** das Medium ferner Befehle speichert, die einem ersten prozessorbasierten System (8b) das Herunterladen von Informationen vom zweiten prozessorbasierten System (8a) ermöglichen, falls die Informationen nicht im Cache gespeichert sind.

9. Ein Speichermedium (42) gemäß Anspruch 8, **dadurch gekennzeichnet, dass** das Medium ferner Befehle speichert, die es einem ersten prozessorbasierten System (8b) ermöglichen, die heruntergeladenen Informationen im Cache zu speichern.

10. Ein Speichermedium (42) gemäß Anspruch 9, **dadurch gekennzeichnet, dass** das Medium ferner Befehle speichert, die einem ersten prozessorbasierten System (8b) die Verknüpfung der im Cache gespeicherten Informationen mit einem Bezeichner ermöglichen.

11. Ein Speichermedium (42) gemäß Anspruch 10, **dadurch gekennzeichnet, dass** das Medium ferner Befehle speichert, die einem ersten prozessorbasierten System (8b) das Verknüpfen der im Cache gespeicherten Informationen mit einem die besagten Daten begleitenden Bezeichner ermöglichen.

12. Ein prozessorbasiertes System (8b), das einen Prozessor (38) und
einen mit diesem verkoppelten Datenträger (42) umfasst, der Befehle speichert, die den besagten Prozessor (38) zum Herstellen einer Online-Besprechung mit einem entfernten prozessorbasierten System (8a), zum Datenempfang vom entfernten prozessorbasierten System (8a) bezüglich der zu übersendenden Informationen, zur Bestimmung, ob die Informationen im Cache gespeichert sind und im positiven Fall zum Abrufen der im Cache gespeicherten Informationen ermöglichen.

13. Ein prozessorbasiertes System (8b) gemäß Anspruch 12, **dadurch gekennzeichnet, dass** der Datenträger (42) ferner Befehle speichert, die dem Prozessor (38) den Empfang eines Bildbezeichners ermöglichen.

14. Ein prozessorbasiertes System (8b) gemäß Anspruch 13, **dadurch gekennzeichnet, dass** der Datenträger (42) ferner Befehle speichert, die dem Prozessor (38) die Ermittlung, ob der Bildbezeichner die im Cache gespeicherten Informationen erkennt, ermöglichen.

15. Ein prozessorbasiertes System (8b) gemäß Anspruch 14, **dadurch gekennzeichnet, dass** der Datenträger (42) ferner Befehle speichert, die dem Prozessor (38) den Empfang eines heruntergeladenen Bildteils ermöglichen.

16. Ein prozessorbasiertes System (8b) gemäß Anspruch 12, **dadurch gekennzeichnet, dass** der Datenträger (42) ferner Befehle speichert, die dem Prozessor (38) die Ermittlung eines Zustands des entfernten prozessorbasierten Systems (8a) und je nach Zustand des entfernten prozessorbasierten Systems (8a) das Räumen der im Cache gespeicherten Informationen ermöglichen.

17. Ein prozessorbasiertes System (8b) gemäß Anspruch 16, **dadurch gekennzeichnet, dass** der Datenträger (42) ferner Befehle speichert, die dem Prozessor (38) die Ermittlung, ob sich das entfernte prozessorbasierte System (8a) in einem die Bildabänderung zulassenden Zustand befindet und im positiven Fall das Räumen der im Cache gespeicherten Informationen ermöglichen.

18. Ein prozessorbasiertes System (8b) gemäß Anspruch 12, **dadurch gekennzeichnet, dass** der Datenträger (42) ferner Befehle speichert, die dem Prozessor (38) das Herunterladen von Informationen für das entfernte prozessorbasierte System (8a) ermöglichen, falls die Informationen nicht im Cache gespeichert sind.

19. Ein prozessorbasiertes System (8b) gemäß Anspruch 18, **dadurch gekennzeichnet, dass** der Datenträger (42) ferner Befehle speichert, die es dem Prozessor (38) ermöglichen, die heruntergeladenen Informationen im Cache zu speichern.

20. Ein prozessorbasiertes System (8b) gemäß Anspruch 19, **dadurch gekennzeichnet, dass** der Datenträger (42) ferner Befehle speichert, die dem Prozessor (38) das Verknüpfen der im Cache gespeicherten Informationen mit einem Bezeichner ermöglichen.

21. Ein prozessorbasiertes System (8b) gemäß Anspruch 20, **dadurch gekennzeichnet, dass** der Datenträger (42) ferner Befehle speichert, die dem Prozessor (38) das Verknüpfen der im Cache gespeicherten Informationen mit einem diese Informationen begleitenden Bezeichner ermöglichen.

22. Ein Verfahren, welches das Herstellen einer Online-Besprechung mit einem prozessorbasierten System (8a);
den Datenempfang vom prozessorbasierten System (8a) bezüglich zu sendender Informationen;
die Ermittlung, ob die Informationen im Cache gespeichert sind; und
im Fall, dass sich die Informationen im Cache befinden, das Abrufen der im Cache gespeicherten Informationen, umfasst.

23. Verfahren gemäß Anspruch 22, das ferner die Ermittlung eines Zustands des prozessorbasierten Systems (8a) und je nach Zustand des prozessorbasierten Systems (8a) das Räumen der im Cache gespeicherten Informationen umfasst.

24. Verfahren gemäß Anspruch 23 einschließlich der Ermittlung, ob sich das prozessorbasierte System (8a) in einem Bildabänderungen zulassenden Zustand befindet, und im positiven Fall des Räumens der im Cache gespeicherten Informationen.

25. Verfahren gemäß Anspruch 23, das ferner in Antwort auf die vom prozessorbasierten System (8a) empfangenen Daten das Räumen von im Cache gespeicherten Informationen umfasst.

26. Ein Speichermedium (42), das Befehle speichert, die es einem ersten prozessorbasiertem System (8a) ermöglichen, folgende Schritte auszuführen:
Herstellen einer Online-Besprechung mit einem zweiten prozessorbasiertem System (8b), wobei dieses zweite prozessorbasierte System (8b) entsprechend einem Verfahren der Ansprüche 22 bis 25 funktioniert;
Datenübertragung auf das zweite prozessorbasierte System (8b) bezüglich der zu sendenden Informationen;
und
Senden der Informationen zum zweiten prozessorbasierten System (8b) auf Anfrage des zweiten prozessorbasierten Systems (8b) hin.

27. Ein Speichermedium (42) gemäß Anspruch 26, **dadurch gekennzeichnet, dass** das Medium ferner Befehle speichert, die es dem ersten prozessorbasierten System (8a) ermöglichen, Daten an das zweite prozessorbasierte System (8b) darüber zu senden, ob ein Cache-Speicher des zweiten prozessorbasierten Systems (8b) zu räumen ist.

## Revendications

1. Support de mémorisation (42) mémorisant des instructions qui permettent à un premier système à base de processeur (8b) de :
établir une réunion en ligne avec un second système à base de processeur (8a),
recevoir des données depuis le second système à base de processeur (8a) concernant des informations à transmettre,
déterminer si les informations sont mises en cache, et
récupérer les informations mises en cache si les informations ont été mises en cache.

2. Support de mémorisation (42) selon la revendication 1, dans lequel le support mémorise de plus des instructions qui permettent à un premier système à base de processeur (8b) de recevoir un identificateur d'image.

3. Support de mémorisation (42) selon la revendication 2, dans lequel le support mémorise de plus des instructions qui permettent à un premier système à base de processeur (8b) de déterminer si l'identificateur d'image identifie des informations mises en cache.

4. Support de mémorisation (42) selon la revendication 3, dans lequel le support mémorise de plus des instructions qui permettent à un premier système à base de processeur (8b) de recevoir une partie d'une image téléchargée.

5. Support de mémorisation (42) selon la revendication 1, dans lequel le support mémorise de plus des instructions qui permettent à un premier système à base de processeur (8b) de déterminer un état du second système à base de processeur (8a) et de vider des informations mises en cache en fonction de l'état du second système à base de processeur (8a).

6. Support de mémorisation (42) selon la revendication 5, dans lequel le support mémorise de plus des instructions qui permettent à un premier système à base de processeur (8b) de déterminer si le second système à base de processeur (8a) est dans un état qui permet à des images d'être modifiées et si tel est le cas de vider les informations mises en cache.

7. Support de mémorisation (42) selon la revendication 1, dans lequel le support mémorise de plus des instructions qui permettent à un premier système à base de processeur (8b) d'envoyer au second système à base de processeur (8a) une demande d'informations concernant l'état du second système à base de processeur et de recevoir des donnes du second système à base de processeur (8a) concernant son état et de vider des informations mises en cache en fonction de l'état du second système à base de processeur (8a).

8. Support de mémorisation (42) selon la revendication 1, dans lequel le support mémorise de plus des instructions qui permettent à un premier système à base de processeur (8b) de télécharger des informations à partir du second système à base de processeur (8a) si les informations ne sont pas mises en cache.

9. Support de mémorisation (42) selon la revendication 8, dans lequel le support mémorise de plus des instructions qui permettent à un premier système à base de processeur (8b) de mettre en cache les informations téléchargées.

10. Support de mémorisation (42) selon la revendication 9, dans lequel le support mémorise de plus des instructions qui permettent à un premier système à base de processeur (8b) d'associer les informations mises en cache à un identificateur.

11. Support de mémorisation (42) selon la revendication 10, dans lequel le support mémorise de plus des instructions qui permettent à un premier système à base de processeur (8b) d'associer les informations mises en cache à un identificateur inclus avec lesdites données.

12. Système à base de processeur (8b) comportant :
un processeur (38), et
un support de mémorisation de données (42) couplé audit processeur et mémorisant des instructions permettant audit processeur (38) d'établir une réunion en ligne avec un système à base de processeur distant (8a), de recevoir des données depuis le système distant à base de processeur (8a) concernant des informations à transmettre, de déterminer si les informations sont mises en cache, et de récupérer les informations mises en cache si les informations ont été mises en cache.

13. Système à base de processeur (8b) selon la revendication 12, dans lequel le support de mémorisation de données (42) mémorise de plus des instructions permettant au processeur (38) de recevoir un identificateur d'image.

14. Système à base de processeur (8b) selon la revendication 13, dans lequel le support de mémorisation de données (42) mémorise de plus des instructions permettant au processeur (38) de déterminer si l'identificateur d'image identifie des informations mises en cache.

15. Système à base de processeur (8b) selon la revendication 14, dans lequel le support de mémorisation de données (42) mémorise de plus des instructions permettant au processeur (38) de recevoir une partie d'une image téléchargée.

16. Système à base de processeur (8b) selon la revendication 12, dans lequel le support de mémorisation de données (42) mémorise de plus des instructions permettant au processeur (38) de déterminer un état du système distant à base de processeur (8a) et de vider des informations mises en cache en fonction de l'état du système distant à base de processeur (8a).

17. Système à base de processeur (8b) selon la revendication 16, dans lequel le support de mémorisation de données (42) mémorise de plus des instructions permettant au processeur (38) de déterminer si le système à base de processeur distant (8a) est dans un état qui permet à des images d'être modifiées et si tel est le cas de vider les informations mises en cache.

18. Système à base de processeur (8b) selon la revendication 12, dans lequel le support de mémorisation de données (42) mémorise de plus des instructions permettant au processeur (38) de télécharger des informations pour le système distant à base de processeur (8a) si les informations ne sont pas mises en cache.

19. Système à base de processeur (8b) selon la revendication 18, dans lequel le support de mémorisation de données (42) mémorise de plus des instructions permettant au processeur (38) de mettre en cache les informations téléchargées.

20. Système à base de processeur (8b) selon la revendication 19, dans lequel le support de mémorisation de données (42) mémorise de plus des instructions permettant au processeur (38) d'associer les informations mises en cache à un identificateur.

21. Système à base de processeur (8b) selon la revendication 20, dans lequel le support de mémorisation de données (42) mémorise de plus des instructions permettant au processeur (38) d'associer des informations mises en cache à un identificateur inclus avec lesdites données.

22. Procédé comportant les étapes consistant à :
établir une réunion en ligne avec un système à base de processeur (8a),
recevoir des données depuis le système à base de processeur (8a) se rapportant à des informations à transmettre,
déterminer si les informations sont mises en cache, et
récupérer les informations mises en cache si les informations ont été mises en cache.

23. Procédé selon la revendication 22, comportant de plus la détermination d'un état du système à base de processeur (8a) et le vidage des informations mises en cache en fonction de l'état du système à base de processeur (8a).

24. Procédé selon la revendication 23, incluant la détermination de si le système à base de processeur (8a) est dans un état qui permet à des images d'être modifiées et si tel est le cas le vidage des informations mises en cache.

25. Procédé selon la revendication 23, comportant de plus le vidage d'informations mises en cache en réponse à des données reçues depuis le système à base de processeur (8a).

26. Support de mémorisation (42) mémorisant des instructions qui permettent à un premier système à base de processeur (8a) d'effectuer les étapes suivantes consistant à :
établir une réunion en ligne avec un second système à base de processeur (8b), ledit second système à base de processeur (8b) fonctionnant conformément à un procédé selon l'une quelconque des revendications 22 à 25,
envoyer des données au second système à base de processeur (8b) se rapportant à des informations à transmettre, et
transmettre les informations au second système à base de processeur (8b) en réponse à la demande provenant du second système à base de processeur (8b).

27. Support de mémorisation (42) selon la revendication 26, dans lequel le support mémorise de plus des instructions qui permettent à un premier système à base de processeur (8a) d'envoyer des données au second système à base de processeur (8b) indiquant si un cache du second système à base de processeur (8b) doit être vidé.
